# EUROPÄISCHE PATENTANMELDUNG

(11) **EP 1 855 080 A2**
(43) Veröffentlichungstag der Anmeldung: **14.11.2007**
(21) Anmeldenummer: 07015115.4
(22) Anmeldetag: 18.08.2000
(51) Int. Cl.: G01B 7/02

(54) **Verfahren und Vorrichtung zur Messung eines zurückgelegten Weges**

(62) Teilanmeldung aus: 00117841.7
(71) Anmelder: Cooper Cameron Corporation, Houston, Texas 77027-9109 (US)
(72) Erfinder: Biester, Klaus, 29342 Wienhausen (DE); Kunow, Peter, 12355 Berlin (DE)
(74) Vertreter: Grünecker, Kinkeldey, Stockmair & Schwanhäusser Anwaltssozietät

(57) **Zusammenfassung**

Eine Wegmessvorrichtung zur Messung eines von einem entlang einer Richtung auslenkbaren Bewegungsobjekt zurückgelegten Weges weist wenigstens ein dem Bewegungsobjekt zugeordnetes erstes Bauteil und ein ortsfestes zweites Bauteil auf. Die Bauteile sind miteinander zur Umsetzung einer Bewegung und/oder Auslenkung des Bewegungsobjekts in ein elektrisches Signal gekoppelt. Die Wegmessvorrichtung weist weiterhin eine Auswerteeinrichtung zur Umsetzung des elektrischen Signals in eine Bewegungs- und/oder Positionsinformation auf.

Damit die Wegmessvorrichtung mit hoher Genauigkeit, ohne Abnutzung, unempfindlich gegenüber Vibrationen, Stößen oder Korrosion und kostengünstig in fast allen Medien ohne spezielle Abdichtung und in jedem Druckbereich einsetzbar ist, ist das erste Bauteil ein Bewegungsobjekt und zweites Bauteil verbindendes Federelement und das zweite Bauteil eine ein einer auf das Federelement ausgeübten Kraft entsprechendes elektrisches Signal abgebende Kraftmesseinrichtung.

## Beschreibung

Die Erfindung betrifft ein Verfahren und eine Vorrichtung zur Messung eines zurückgelegten Weges.

Aus der Praxis ist beispielsweise eine entsprechende Wegmessvorrichtung zur Messung eines von einem entlang einer Richtung auslenkbaren Bewegungsobjekts zurückgelegten Weges bekannt. Ein erstes Bauteil der Wegmessvorrichtung ist dem Bewegungsobjekt zugeordnet und bewegt sich mit diesem. Ein zweites Bauteil der Wegmessvorrichtung ist ortsfest. Die beiden Bauteile sind miteinander gekoppelt, um die Bewegung und/oder Auslenkung des Bewegungsobjekts in ein elektrisches Signal umzusetzen. Dieses elektrische Signal wird einer Auswerteeinrichtung der Wegmessvorrichtung übermittelt und dort in eine Bewegungs- und/oder Positionsinformation umgesetzt.

Ein Beispiel für eine solche vorbekannte Wegmessvorrichtung ist ein potentiometerartiger Sensor. Das erste Bauteil dieses Sensors ist durch einen spulenartig aufgewickelten Draht und das zweite Bauteil durch ein außen entlang dieser Spulenwicklung bewegbares Kontaktelement gebildet. Je nach Stellung des Kontaktelementes relativ zur Spulenwicklung ergibt sich ein entsprechender Widerstand für einen durch Spulenwicklung und Kontaktelement fließenden Strom, der in eine Positionsinformation umsetzbar ist.

Ein weiteres Beispiel für eine bekannte Wegmessvorrichtung ist eine magnetische oder induktive Wegmessung. Bei dieser ist eine Spule oder ein Teil eines Kondensators mit dem bewegten Objekt verbunden und eine weitere Spule bzw. der andere Teil des Kondensators ist ortsfest angeordnet.

Weitere bekannte Wegmessvorrichtungen verwenden beispielsweise optische Sensoren, wobei optisch die Bewegung eines mit dem Bewegungsobjekt bewegten ersten Bauteils ermittelt und durch den ortsfesten Sensor in ein entsprechenden Bewegungssignal umgesetzt wird. Schließlich sind noch Lasereinrichtungen zur Wegmessung bekannt.

Bei diesen vorbekannten Wegmessvorrichtungen ergeben sich verschiedene Nachteile.

Optische Messungen sind zwar sehr genau, aber gleichzeitig sehr empfindlich und nur bei guten Sichtverhältnissen einsetzbar, wobei sie gleichzeitig recht teuer sind.

Magnetische oder induktive Vorrichtungen sind empfindlich gegenüber Vibrationen, Stößen oder dergleichen und sind in der Regel auch recht teuer. Potentiometer-artige Sensoren sind recht ungenau und haben aufgrund von Abnutzungserscheinungen nur eine relativ kurze Einsatzzeit.

Der Erfindung liegt daher die Aufgabe zugrunde, Verfahren oder Wegmessvorrichtungen der eingangs genannten Art dahingehend zu verbessern, dass die Wegmessung mit hoher Genauigkeit, ohne Abnutzung, unempfindlich gegenüber Vibrationen, Stößen oder Korrosion und kostengünstig in fast allen Medien ohne spezielle Abdichtungen und in jedem Druckbereich einsetzbar ist.

Diese Aufgabe wird vorrichtungsmäßig dadurch gelöst, dass das erste Bauteil ein Bewegungsobjekt und zweites Bauteil verbindendes Federelement und das zweite Bauteil eine Kraftmesseinrichtung ist, die ein einer auf das Federelement ausgeübten Kraft entsprechendes elektrisches Signal abgibt.

Verfahrensmäßig wird die Aufgabe dadurch gelöst, dass das Bewegungsobjekt gegen den Widerstand eines elastisch dehnbaren Rückhalteelementes entlang eines im Wesentlichen linearen Weges bewegt wird, dass die in dem Rückhalteelement in Abhängigkeit von dem durch das Bewegungsobjekt zurückgelegten Weg auftretende Rückhaltekraft mittels einer Kraftmesseinrichtung gemessen wird, und ein der Rückhaltekraft entsprechendes Signal von der Kraftmesseinrichtung an eine Auswerteeinrichtung übermittelt und dort ein der Rückhaltekraft entsprechender, durch das Bewegungsobjekt zurückgelegter Weg ermittelt wird.

Die erfindungsgemäße Wegmessvorrichtung ist einfach aufgebaut. Das Federelement wird bei Bewegung des Bewegungsobjekts gedehnt, wobei die im Federelement auftretende Rückhaltekraft im einfachsten Fall direkt proportional zum durch das Bewegungsobjekt zurückgelegten Weg ist. Die Rückhaltekraft wird durch das Federelement auf die Kraftmesseinrichtung übertragen und dort gemessen. Dabei wird von einer mit der Kraftmesseinrichtung verbundener Auswerteeinrichtung ein entsprechendes elektrisches Signal empfangen, das der Rückhaltekraft und damit dem durch das Bewegungsobjekt zurückgelegten Weg entspricht. Die für die erfindungsgemäße Wegmessvorrichtung verwendeten Bauteile sind einfach aufgebaut und preiswert. Es findet keine Abnutzung dieser Bauteile statt, da beispielsweise keine Reibung zwischen den Bauteilen oder zwischen den Bauteilen und anderen Objekten auftritt. Die erfindungsgemäße Wegmessvorrichtung ist unabhängig von einem Medium in dem sie angeordnet ist, von den Sichtbedingungen, von Vibrationen, Stößen oder dergleichen.

Bei einem einfachen Ausführungsbeispiel kann das Federelement eine Spiralfeder sein, die mit ihrem einen Ende am Bewegungsobjekt und mit ihrem anderen Ende mit der Kraftmesseinrichtung verbunden ist. Die Spiralfeder kann in diesem Zusammenhang so ausgewählt werden, dass eine auf das Bewegungsobjekt ausgeübte Rückhaltekraft und damit eine Einschränkung der sonstigen Beweglichkeit des Bewegungsobjekts relativ gering ist und gleichzeitig die Rückhaltekraft groß genug ist, um mittels der Kraftmesseinrichtung ein ausreichend großen Signal zu erhalten.. Bei Verwendung einer solchen Spiralfeder als Federelement zeigt sich weiterhin, dass bei der erfindungsgemäßen Wegmessvorrichtung keine sich tatsächlich zusammen mit dem Bewegungsobjekt bewegenden Teile vorhanden sind. Die Spiralfeder bzw. das Federelement können insbesondere so ausgewählt werden, dass sie sich proportional zur ausgeübten Rückhaltekraft dehnen, so dass die Auswertung des Signals der Kraftmesseinrichtung und entsprechend die Ermittlung von Bewegung bzw. Position des Bewegungsobjekts vereinfacht ist.

Ein solches Federelement kann je nach Erfordernis mit entsprechender Federkonstanten, aus entsprechendem Material und dergleichen ausgewählt werden. Es sei an dieser Stelle darauf hingewiesen, dass bei der erfindungsgemäßen Wegmessvorrichtung oder dem entsprechenden Messverfahren nur eine begrenzte Bewegung des Bewegungsobjekts aufgrund der Verbindung mit dem Federelement und über dieses mit der Kraftmesseinrichtung möglich ist. Im Wesentlichen wird der Bewegungsbereich durch das Federelement und dessen auswertbare maximale Dehnung bestimmt.

Erfindungsgemäß ist es möglich, dass das Federelement einem gekrümmt verlaufenden, beispielsweise kreisförmigen Weg des Bewegungsobjekts folgt und entsprechend die Position des Objekts entlang dieses Weges feststellbar ist. Ein einfaches Ausführungsbeispiel für eine Wegmessvorrichtung ohne einen gekrümmten Verlauf des Federelementes und ohne möglicherweise auftretende Reibung zwischen Federelement und Führung kann darin gesehen werden, wenn das Federelement sich im Wesentlichen geradlinig erstreckt. In diesem Fall ist es weiterhin von Vorteil, wenn sich auch das Bewegungsobjekt geradlinig bewegt.

Um die Wegmessvorrichtung in einfacher Weise an unterschiedliche Erfordernisse anzupassen, wie beispielsweise längere von dem Bewegungsobjekt zurückzulegende Wege oder dergleichen, kann das Federelement austauschbar sein. So sind die Federelemente entsprechend zu ihrer maximalen Dehnung auswählbar.

Die Kraftmesseinrichtung kann in unterschiedlicher Weise aufgebaut sein. Erfindungsgemäß muss eine solche Kraftmesseinrichtung die auf sie ausgeübte Kraft in ein entsprechendes elektrisches Signal umsetzen, das dann von der Auswerteeinheit erfasst und verarbeitet wird.

Bei einem einfachen und kostengünstig herstellbaren Ausführungsbeispiel weist die Kraftmesseinrichtung wenigstens einen elektrisch leitfähigen, insbesondere drahtförmigen Leiter auf, dessen elektrischer Widerstand abhängig von einer auf ihn in Längsrichtung ausgeübten Kraft ist. Ein solcher Leiter ist ebenfalls aus unterschiedlichen Materialien herstellbar, die beispielsweise hinsichtlich der Umgebungsbedingungen, unter denen die Wegmessvorrichtung eingesetzt wird, ausgewählt werden. Dadurch ist die erfindungsgemäße Wegmessvorrichtung auch in aggressiven Medien, unter Wasser, unter Druck, unter Vakuum und dergleichen im Wesentlichen ohne Einschränkungen einsetzbar. Durch den einfachen Aufbau der Wegmessvorrichtung ergibt sich kein Verschleiß und keine Abnutzung der einzelnen Teile, so dass die Lebensdauer außerordentlich hoch ist.

Da ein Federelement in der Regel eine weiche Dämpfungscharakteristik hat, werden entsprechende Vibrationen, Stöße oder dergleichen ohne Einfluss auf die Kraftmesseinrichtung übertragen.

Ein solcher elektrischer Leiter als Kraftmesseinrichtung ändert bei Ausüben einer entsprechenden Zugkraft auf den Leiter seinen elektrischen Widerstand und solche Widerstandsänderung kann über entsprechende Spannungs- oder Stromänderungen erfasst und als Signal in der Auswerteeinrichtung ausgewertet werden.

Um einen Nullpunkt zur Wegmessung in einfacher Weise festzulegen, kann das Federelement vorgespannt sein und erst bei weiterer Spannung des vorgespannten Federelementes wird ein entsprechendes Bewegungs- bzw. Positionssignal durch die Auswerteeinheit ermittelt.

Um bei einem drahtförmigen Leiter gewisse statistische Unregelmäßigkeiten des Drahtes, wie Durchmesserabweichungen, Änderungen in der Materialbeschaffenheit usw. in einfacher Weise zu kompensieren, kann der Leiter eine Anzahl von parallel zueinander angeordneten elektrisch leitfähigen Drähten aufweisen. Dadurch werden entsprechende statistische Abweichungen der einzelnen Drähte gemittelt und es ergibt sich eine über ihren gesamten Messbereich genau messende Kraftmesseinrichtung.

Die Drähte können Einzeldrähte sein oder durch einen einzelnen Draht gebildet sein, der mäanderförmig verlegt ist.

Um bei einem solchen elektrischen Leiter Änderungen im Widerstand in einfacher Weise feststellen zu können, kann der elektrische Leiter in einer Brückenschaltung, wie einer sogenannten Wheatstone-Brücke, verschaltet sein und wenigstens einen Widerstand in der Brückenschaltung bilden. Durch eine solche Brückenschaltung sind Messungen mit hoher Genauigkeit möglich, wodurch sich ebenfalls eine hohe Genauigkeit für die Positionsbestimmung des Bewegungsobjekts ergibt.

Um Änderungen des Widerstandes des Leiters aufgrund von Temperaturänderungen zu kompensieren, so dass diese nicht zu einer fehlerhaften Bestimmung der Position des Bewegungsobjekts führen, kann die Brückenschaltung einen weiteren Widerstand analog zu dem durch die Kraftmesseinrichtung gebildeten Widerstand aufweisen. Ist die Kraftmesseinrichtung beispielsweise durch eine Anzahl von Drähten gebildet, so wird dieser weitere Widerstand in gleicher Weise aufgebaut. Allerdings wird er im Gegensatz zur Kraftmesseinrichtung nicht einer entsprechenden Zugkraft durch das Federelement ausgesetzt.

Erfindungsgemäß ergibt sich durch die Verwendung der Brückenschaltung und der elektrisch leitfähigen Drähte als Kraftmesseinrichtung ein einfacher elektrischer Aufbau, der ebenfalls nur einfache Mittel bei der Auswerteeinrichtung bedingt. Beispielsweise sind ein Verstärker und/oder ein Differenzierer und/oder eine Ausgabeeinrichtung in Verbindung mit einem Mikroprozessor oder dergleichen die einzigen elektronischen Bestandteile die erforderlich sind. Der Differenzierer kann entfallen, falls beispielsweise auf eine Ermittlung der Geschwindigkeit oder Beschleunigung des Bewegungsobjekts bei dessen Bewegung verzichtet wird. Außerdem können Einrichtungen anderer Auswerteeinrichtungen verwendet werden, wenn diese beispielsweise softwaremäßig umstellbar sind.

Durch den einfachen, robusten und sicheren Aufbau der erfindungsgemäßen Wegmessvorrichtung ist diese insbesondere für Einsätze geeignet, die fernab und in unzugänglichen Gebieten erfolgen. Ein Einsatzgebiet ist beispielsweise die Verwendung der vorangehend beschriebenen Messvorrichtung für ein linear bewegtes Bewegungsobjekt einer Vorrichtung aus der Öl- und/oder Gasgewinnung. Entsprechende Vorrichtungen sind sogenannte Aktuatoren, BOP (blow out preventor), Ventile und dergleichen, wie sie bei der Öl- und Gasgewinnung notwendig sind. Dabei ist das Einsatzgebiet der erfindungsgemäßen Wegmessvorrichtung nicht auf Einsätze an Land beschränkt, sondern durch die Unempfindlichkeit gegenüber Druck oder anderen unwirtlichen Umgebungseinflüssen ist insbesondere auch ein Einsatz unter Wasser möglich. Dies gilt analog für einen unterirdischen Einsatz.

Es sei angemerkt, dass die erfindungsgemäße Wegmessvorrichtung natürlich nicht auf Vorrichtungen bei Öl- und/oder Gasgewinnung begrenzt ist, sondern in anderen Maschinen, in der Fertigung, bei Erdbearbeitungsvorrichtungen und dergleichen einsetzbar ist. Im Wesentlichen ist die erfindungsgemäße Wegmessvorrichtung überall dort einsetzbar, wo ein Bewegungsobjekt sich über einen begrenzten Bereich insbesondere linear hin und her bewegt.

Bei der Öl- und Gasgewinnung werden insbesondere eine Reihe von Linearbetätigungsvorrichtungen verwendet, von denen eine beispielsweise in der DE 20 008 415 beschrieben wird. Eine solche Linearbetätigungsvorrichtung dient insbesondere zur Betätigung von Ventilen, Drosseln oder dergleichen bei der Öl- und/oder Gasgewinnung und weist zumindest ein innerhalb eines Gehäuses linearbeweglich gelagertes Betätigungselement und eine diesem zugeordnete Antriebsvorrichtung auf. Das Betätigungselement kann eine Kugelspindel sein, die in einer entsprechenden Mutter drehbar gelagert ist. Die Mutter ist mit der entsprechenden Antriebsvorrichtung bewegungsverbunden und eine dadurch induzierte Drehung der Mutter wird in eine Längsbewegung der Kugelspindel umgesetzt. Zur weiteren Beschreibung dieser Linearbetätigungsvorrichtung wird hiermit ausdrücklich nochmals auf die DE 20 008 415 verwiesen.

Um in einfacher Weise bei einer solchen Linearbetätigungsvorrichtung die Position des Betätigungselementes relativ zum Gehäuse zu bestimmen, ist erfindungsgemäß das Betätigungselement an einem Ende mit einem Federelement verbunden, welches mit seinem dem Betätigungselement abgewandten Ende mit einer Kraftmesseinrichtung verbunden ist, die ein einer von dem Federelement auf die Kraftmesseinrichtung übertragenden Kraft entsprechendes elektrisches Signal an eine Auswerteeinrichtung übermittelt. Das heißt, die erfindungemäße Linearbetätigungsvorrichtung zeichnet sich dadurch aus, dass die vorangehend beschriebene Wegmessvorrichtung in dieser eingebaut ist.

Entsprechend kann die Wegmessvorrichtung in der Linearbetätigungsvorrichtung die gleichen Merkmale wie die vorangehend beschriebene Wegmessvorrichtung aufweisen. Durch den Einbau der Wegmessvorrichtung in die Linearbetätigungsvorrichtung ergeben sich einige weitere Ausgestaltungen, die im Folgenden beschrieben sind.

Um beispielsweise das Federelement vor einer Beschädigung durch sich bewegende Teile der Linearbetätigungsvorrichtung zu schützen, kann das Federelement in einem Rohr angeordnet und geführt sein.

Um das Federelement an seinen Enden in einfacher Weise sowohl am Betätigungselement als auch an der Kraftmesseinrichtung befestigen zu können, kann das Federelement an seinen Enden entsprechende Anschlussstücke aufweisen. An diesen ist das Federelement mit einem Ende einhängbar und das Anschlussstück ist dann durch Verschrauben oder dergleichen am Betätigungselement bzw. an der Kraftmesseinrichtung lösbar zu befestigen.

Bei einer Linearbetätigungsvorrichtung, die ein sich durch eine Schraubbewegung linear vorwärts bewegendes Betätigungselement aufweist, ist es von Vorteil, wenn die entsprechende Drehung des Betätigungselementes nicht auf das Federelement übertragen wird und damit zu einer Spannung oder Kraft im Federelement führt, die nicht durch die lineare Bewegung des Betätigungselementes bedingt ist. Dazu kann beispielsweise zumindest das Anschlussstück zwischen Federelement und Betätigungselement eine Drehentkoppeleinrichtung aufweisen. Mittels dieser Drehentkoppeleinrichtung wird nur die lineare Bewegung des Betätigungselementes auf das Federelement übertragen und die Drehung wird von der Drehkoppeleinrichtung aufgenommen.

Die Kraftmesseinrichtung kann entsprechend ausgebildet sein, um die auf sie durch das Federelement ausgeübte Zugkraft in ein elektrisches Signal umzuwandeln. Ein einfaches Beispiel für eine solche Kraftmesseinrichtung kann darin gesehen werden, wenn diese wenigstens einen elektrischen Messleiter aufweist, dessen elektrischer Widerstand sich in Abhängigkeit von einer auf den Messleiter ausgeübten Kraft ändert.

Um entsprechende Widerstandsänderungen über zugehörige Spannungsänderungen einfach erfassen zu können, kann der elektrische. Messleiter als Widerstand in einer Brückenschaltung, wie einer sogenannten Wheatstone-Brücke verschaltet sein.

Der elektrische Messleiter kann als Leiterdraht oder durch eine Anzahl von parallel angeordneten Leiterdrähten ausgebildet sein. Bei Verwendung mehrerer Leiterdrähte werden entsprechende statistische Abweichungen von Einzeldrähten ausgeglichen.

Um Temperaturdriften des elektrischen Messleiters ausgleichen zu können, kann ein weiterer elektrischer Messleiter ohne Kraftbeaufschlagung in der Brückenschaltung zur Temperaturkompensation verschaltet sein.

Im Folgenden werden vorteilhafte Ausführungsbeispiele der Erfindung anhand der in der Zeichnung beigefügten Figuren näher erläutert.

Es zeigen:
- Fig. 1: eine Draufsicht auf eine Prinzipdarstellung eines Ausführungsbeispiels einer erfindungsgemäßen Wegmessvorrichtung;
- Fig. 2: eine teilweise geschnittene Draufsicht auf ein zweites Ausführungsbeispiel;
- Fig. 3: eine teilweise geschnittene Draufsicht auf ein drittes Ausführungsbeispiel;
- Fig. 4: eine teilweise geschnittene Draufsicht auf ein viertes Ausführungsbeispiel;
- Fig. 5: eine Schaltkreisdarstellung analog zu Fig. 4;
- Fig. 6: einen Längsschnitt durch eine Linearbetätigungsvorrichtung mit eingebauter Wegmessvorrichtung in teilweiser Darstellung;
- Fig. 7: eine vergrößerte Darstellung eines Details "X", und
- Fig. 8: eine vergrößerte Darstellung eines Details "Y".

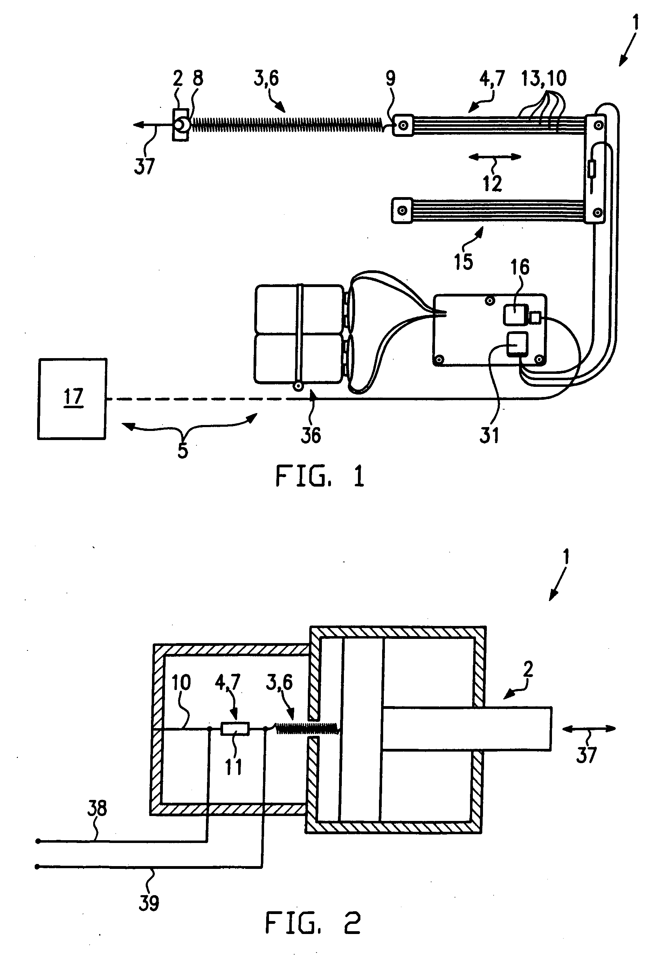

In Fig. 1 ist eine Draufsicht auf ein prinzipielles Ausführungsbeispiel einer erfindungsgemäßen Wegmessvorrichtung 1 dargestellt. Diese weist ein Federelement 6 als erstes Bauteil und eine Kraftmesseinrichtung 7 als zweites Bauteil 4 auf. Das erste Bauteil 3 ist mit einem Bewegungsobjekt 2 an einem Ende 8 verbunden. Bei Bewegung des Bewegungsobjekts 2 in Richtung 37 wird das Federelement 6 gedehnt und eine entsprechende Kraft über Ende 9 des Federelementes 6 auf das zweite Bauteil 4, d.h. die Kraftmesseinrichtung 7, ausgeübt. Mittels der Kraftmesseinrichtung 7 wird die ausgeübte Kraft in ein elektrisches Signal umgesetzt, aus dem durch die anschießende Auswerteeinheit 5 eine entsprechende Position des Bewegungsobjekts 2 ermittelt wird.

Das Bewegungsobjekt 2 bewegt sich linear in Bewegungsrichtung 37 und in Längsrichtung 12 des Federelementes 6 oder der Kraftmesseinrichtung 7.

Die Kraftmesseinrichtung 7 ist durch einen elektrischen Leiter 10 gebildet, der eine Anzahl von elektrischen Leitungsdrähten 13 umfassen kann. Diese ändern ihren Widerstand in Abhängigkeit von der auf sie ausgeübten Kraft. Das heißt, eine Widerstandsänderung der elektrischen Leiterdrähte 13 entspricht einer durch das Federelement 6 übertragenen Kraft und die Kraft ist proportional zu einer Auslenkung des Federelementes 6 und damit zu einer Position des Bewegungsobjekts 2.

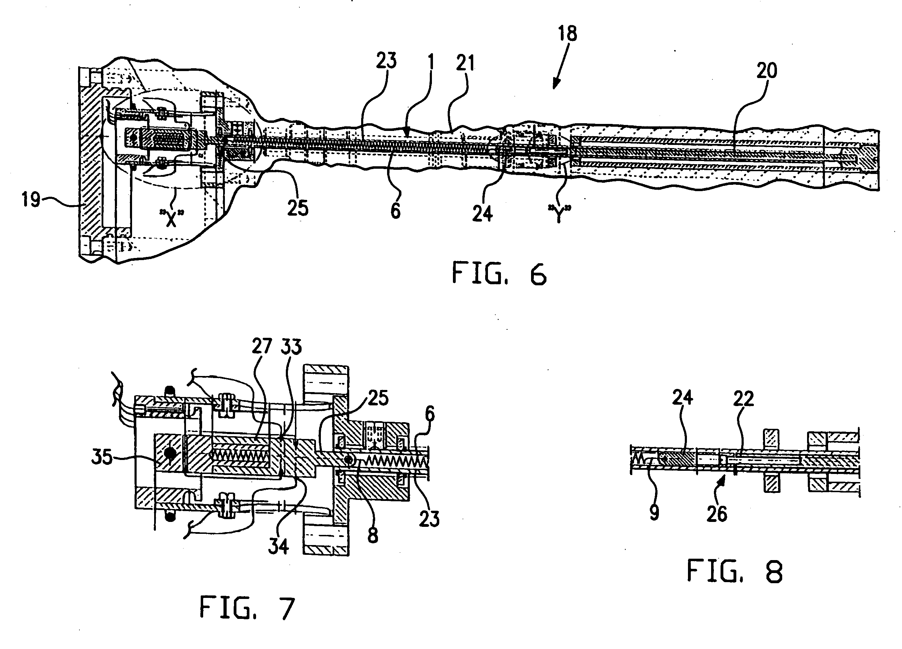

Die Drähte 13 sind parallel zueinander angeordnet und können elektrisch ebenfalls parallel oder auch in Reihe verschaltet sein. Die Drähte 13 bilden einen Widerstand, der Teil einer Brückenschaltung ist, siehe Fig. 5. Ein weiterer Widerstand 15 dieser Brückenschaltung ist ebenfalls durch eine Anzahl von elektrischen Leiterdrähten gebildet und dieser weitere elektrische Widerstand 15 entspricht dem durch die elektrischen Leiterdrähte 13 gebildeten Widerstand und dient zur Temperaturkompensation.

Mit den durch die Drähte gebildeten Widerständen ist eine Offset-Einrichtung 31, 32 und ein Verstärker 16 verbunden. Von dem Verstärker sind entsprechende Signale an eine Ausgabeeinheit der Auswerteeinheit 5 ausgebbar, wobei diese Auswerteeinheit 5 auch einen Differenzierer 17 aufweisen kann, durch den die entsprechenden sich zeitlich ändernden Positionswerte des Bewegungsobjekts 2 differenzierbar und somit eine Geschwindigkeit und gegebenenfalls Beschleunigung des Bewegungsobjekts ermittelbar ist.

Durch die Offset-Einrichtung 31, 32 ist ein Nullpunkt der Auslenkung des Federelementes 6 einstellbar. Beispielsweise kann die Feder 2 bis 5 % vorgespannt sein, um einen solchen messbaren Nullpunkt für die Bewegung des Bewegungsobjekts 2 zu erzeugen. Ein dieser Vorspannung zugeordneter Spannungswert wird mittels der Offset-Einrichtung 31, 32 auf Null geregelt.

Zur Spannungsversorgung der Drähte und der Auswerteeinrichtung 5 ist eine Spannungsversorgung 36 mit den Drähten und der Auswerteeinheit verbunden.

In Fig. 2 ist ein weiteres Ausführungsbeispiel einer erfindungsgemäßen Wegmessvorrichtung analog zu Fig. 1 dargestellt. Das Bewegungsobjekt 2 ist durch eine in einem Gehäuse in Bewegungsrichtung 37 beweglich gelagerten Stempel gebildet. Dieser ist auf seiner Rückseite mit dem Federelement 6 verbunden. In Reihe zum Federelement 6 ist ein elektrischer Leiter 10 als Kraftmesser 7 mit einem Widerstand 11 angeschlossen, der an seinem dem Federelement 6 gegenüberliegenden Ende am Gehäuse befestigt ist. Der Widerstand 11 ist über zwei Verbindungsleitungen 38, 39 mit einer entsprechenden Brückenschaltung, siehe Fig. 5, verbunden.

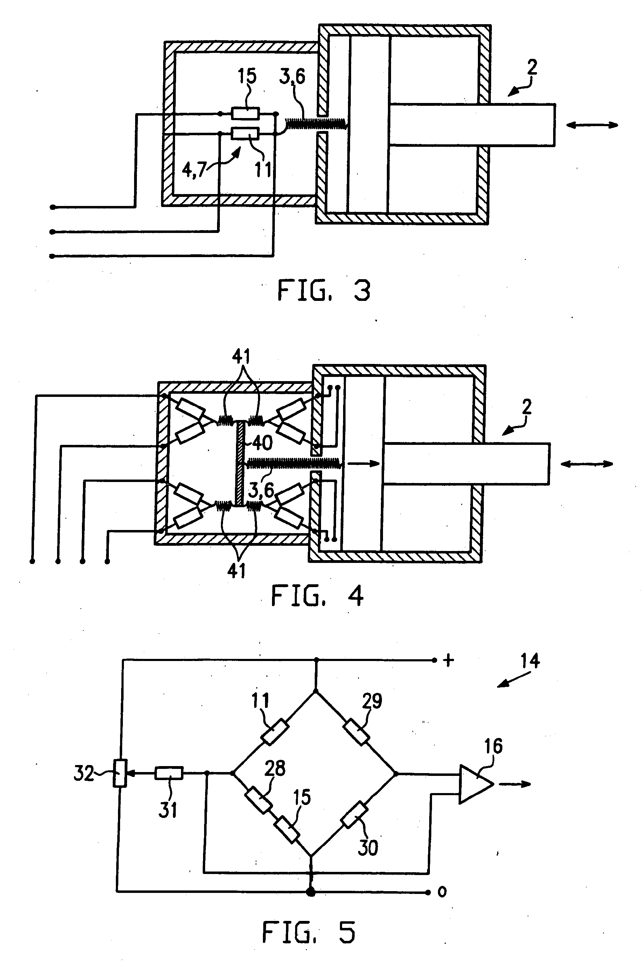

In Fig. 3 ist ein weiteres Ausführungsbeispiel analog zu Fig. 2 dargestellt. Dieses Ausführungsbeispiel entspricht dem Ausführungsbeispiel nach Fig. 1, wobei ein weiterer Widerstand 15 analog zum Widerstand 11 angeordnet und Teil der Brückenschaltung nach Fig. 5 ist. Durch den weiteren Widerstand 15 in unmittelbarer Nähe zum Widerstand 11 ist beispielsweise eine Temperaturkompensation der Wegmessung möglich.

In Fig. 4 ist ein viertes Ausführungsbeispiel analog zu den vorangehenden Fig. 2 und 3 dargestellt. Bei diesem Ausführungsbeispiel erfolgt eine Kraftmessung über alle Widerstände der Brückenschaltung nach Fig. 5. Das Federelement 6 wirkt entsprechend auf alle Leiter ein, die zumindest teilweise durch separate Federelemente gebildet sein können. Je nach Auslenkung einer mittig mit dem Federelement 6 verbundenen Anschlussplatte 40 werden auch die entsprechenden Einzelfederelemente 41 gedehnt bzw. gestaucht und entsprechende Widerstandsänderungen induziert.

Ein Schaltbild für eine Brückenschaltung zur Bestimmung einer Widerstandsänderung und damit einer entsprechenden Spannungsänderung ist in Fig. 5 in Form einer sogenannten Wheatstone-Brücke dargestellt. Eine solche Schaltung ist an sich bekannt. Die Schaltung wird durch zumindest vier Widerstände gebildet, von denen beispielsweise die Widerstände 29 und 30 mit gleichem Widerstandswert ausgebildet sind. Zumindest ein Widerstand der Brückenschaltung ist durch den Widerstand 11 des elektrischen Leiters 10 gebildet, siehe Fig. 2. Auch die Widerstände 15, 28 können durch einen bezüglich der Wegmessung unabhängigen Widerstand gebildet sein. In der Regel ist dieser allerdings variierbar, um anfänglich vor Auslenkung des Bewegungsobjekts die Brückenschaltung auf Null abzugleichen.

Bei dem Ausführungsbeispiel nach Fig. 5 ist auch der Widerstand 15, siehe Fig. 3, durch eine Anzahl von elektrischen Drähten, siehe auch Fig. 1, gebildet. In diesem Fall dient der Widerstand 15 zur Temperaturkompensation des Widerstands 11. Eine Offset-Einstellung, d.h. die Einstellung eines Nullpunkts bei leicht vorgespannten Federelementen 6, ist durch den Widerstand 31 im Zusammenhang mit dem Widerstand 32 möglich.

Die erfassten Signale werden über einen Verstärker 16, siehe auch Fig. 1, zur Weiterverarbeitung an die Auswerteeinrichtung 5 von der Brückenschaltung 14 übermittelt.

Ein Zweig der Brückenschaltung ist geerdet, siehe "O" und der andere Zweig liegt am Pluspol einer Spannungsversorgung.

In Fig. 6 ist ein Anwendungsbeispiel für ein Ausführungsbeispiel der erfindungsgemäßen Wegmessvorrichtung 1 dargestellt. In diesem Fall ist die Wegmessvorrichtung 1 in einer Linearantriebsvorrichtung 21 angeordnet, wie sie beispielsweise in der DE 20 008 415 des gleichen Anmelders beschrieben ist. Eine solche Linearantriebsvorrichtung 21 weist zumindest ein Betätigungselement 20 auf, das in Längsrichtung hin und her bewegbar ist. Das Betätigungselement 20 ist in der Regel eine Kugelspindel, die in einer Kugelumlaufmutter drehbar gelagert ist. Bei Drehung der Kugelumlaufmutter mittels einer nur teilweise in Fig. 6 dargestellten Antriebsvorrichtung 21 erfolgt eine entsprechende Drehung des Betätigungselementes 20 und durch die Drehung relativ zur in Längsrichtung festliegenden Kugelumlaufmutter ergibt sich eine Bewegung des Betätigungselementes 20 in Längsrichtung.

Das Betätigungselement 20 ist an einem Ende 22, siehe auch Fig. 8, mit dem Federelement 6 der Wegmessvorrichtung 1 verbunden. Das Federelement ist in einem Rohr 23 durch die Antriebsvorrichtung 21 geführt und mit seinem dem Betätigungselement 20 gegenüberliegenden Ende 8 mit einer entsprechenden Kraftmesseinrichtung 7 in Form eines elektrischen Messleiters 27 verbunden. Die Umsetzung der vom Betätigungselement 20 auf das Federelement 6 ausgeübten Kraft mittels der Kraftmesseinrichtung 7 bzw. des entsprechenden elektrischen Messleiters 27 in eine entsprechende Spannung erfolgt analog zu den oben beschriebenen Ausführungsbeispielen der Wegmessvorrichtung 1.

Das Federelement 6 nach Fig. 6 bis 8 ist über Anschlussstücke 24 und 25 mit dem Betätigungselement 20 bzw. mit dem elektrischen Messleiter 27 verbunden. Zumindest das Anschlussstück 24 weist eine Drehentkoppelungseinrichtüng 26 auf. Durch diese wird eine Übertragung der Drehung des als Kugelspindel ausgebildeten Betätigungselementes 20 auf das Federelement 6 verhindert. Die Drehentkoppelungseinrichtung 26 kann beispielsweise durch eine Schraube gebildet sein, die in das Betätigungselement 20 an dessem Ende 22 eingeschraubt ist und die im Anschlussstück 24 drehbar aber in Längsrichtung des Federelementes 6 festgelegt gelagert ist.

Fig. 7 entspricht einer vergrößerten Darstellung des Ausschnitts "X" aus Fig. 6 und Fig. 8 ist eine vergrößerte Darstellung des Ausschnitts "Y" aus Fig. 6.

In Fig. 7 ist insbesondere die Verbindung des Federelementes 6 mit dem Anschlussstück 25 dargestellt. Mit diesem ist der elektrische Messleiter 27 verbunden, der an seinem dem Federelement 6 gegenüberliegenden Ende an einem. Festpunkt 35 des Gehäuses 19 der Linearbetätigungsvorrichtung 18 befestigt ist. An dem elektrischen Messleiter 27 sind entsprechende Verbindungsdrähte über Lötstellen 33, 34 angeschlossen, die zu einer Brückenschaltung 14, siehe Fig. 5, führen.

Erfindungsgemäß ist es möglich, in einfacher und preiswerter Weise insbesondere eine Linearbewegung eines Bewegungsobjekts 2 zu messen. Die Messung erfolgt dadurch, dass bei Bewegung des Bewegungsobjekts 2 eine Rückhaltekraft durch ein Federelement 6 ausgeübt wird. Diese ist allerdings so gering, dass sie die erwünschte Bewegung des Bewegungsobjekts 2 nicht oder nur wenig hindert. Die von dem Federelement 6 ausgeübte Rückhaltekraft wird auf einen elektrischen Leiter als Kraftmesseinrichtung 7 übertragen. Der elektrische Leiter weist beispielsweise eine Anzahl von Drähten auf, deren Widerstandswerte sich bei Ausüben einer Zugkraft in Längsrichtung der Drähte ändert. Die Änderung des Widerstandswertes wird durch eine entsprechende Änderung einer an dem Widerstand abfallenden Spannung ermittelt, wobei diese Widerstandsänderung und damit auch die zugehörige Spannungsänderung abhängig von der ausgeübten Kraft sind. Wird aus den Widerstandsänderungen durch entsprechende Berechnungen die Kraft ermittelt, die von dem Federelement auf das Bewegungsobjekt 2 ausgeübt wird, so lässt sich in einfacher Weise aus der Kraft bei Kenntnis der entsprechenden Parameter (Federkonstante) des Federelementes 6 die Auslenkung der Feder und damit die Position des Bewegungsobjekts 2 ermitteln.

## Patentansprüche

1. Wegmessvorrichtung zur Messung eines von einem entlang einer Richtung auslenkbaren Bewegungsobjekts (2) zurückgelegten Weges mit wenigstens einem dem Bewegungsobjekt zugeordneten ersten Bauteil (3) und einem ortsfesten zweiten Bauteil (4), welche miteinander zur Umsetzung einer Bewegung und/oder Auslenkung des Bewegungsobjekts in ein elektrisches Signal gekoppelt sind, und mit einer Auswerteeinrichtung (5) zur Umsetzung des elektrischen Signals in eine Bewegungs- und/oder Positionsinformation, **dadurch gekennzeichnet, dass** das erste Bauteil (3) ein Federelement (6) ist, welches das Bewegungsobjekt (2) mit dem zweiten Bauteil (4) verbindet, und dass das zweite Bauteil (4) eine Kraftmesseinrichtung (7) ist, die ein elektrisches Signal entsprechend zu einer auf das Federelement (6) ausgeübten Kraft abgibt.

2. Wegmesseinrichtung nach Anspruch 1, **dadurch gekennzeichnet, dass** das Federelement (6) eine Spiralfeder ist, die mit einem Ende (8) am Bewegungsobjekt (2) und mit ihrem anderen Ende (9) mit der Kraftmesseinrichtung (7) verbunden ist.

3. Wegmessvorrichtung nach Anspruch 1 oder 2, **dadurch gekennzeichnet, dass** das Federelement (6) sich im Wesentlichen geradlinig erstreckt.

4. Wegmessvorrichtung nach einem der vorangehenden Ansprüche, **dadurch gekennzeichnet, dass** das Federelement (6) austauschbar ist.

5. Wegmessvorrichtung nach wenigstens einem der vorangehenden Ansprüche, **dadurch gekennzeichnet, dass** die Kraftmesseinrichtung (7) wenigstens einen elektrisch leitfähigen Leiter (10) mit einem elektrischen Widerstand (11) aufweist, der abhängig von einer auf diesen ausgeübten Kraft ist.

6. Wegmessvorrichtung nach einem der vorangehenden Ansprüche, **dadurch gekennzeichnet, dass** der Leiter (2) eine Anzahl von parallel zueinander angeordneten Drähten (13) aufweist.

7. Wegmessvorrichtung nach einem der vorangehenden Ansprüche, **dadurch gekennzeichnet, dass** der Leiter in einer Brückenschaltung (14) verschaltet ist und wenigstens einen Widerstand der Brückenschaltung bildet.

8. Wegmessvorrichtung nach einem der vorangehenden Ansprüche, **dadurch gekennzeichnet, dass** die Brückenschaltung (14) einen weiteren Widerstand aufweist, der durch die Kraftmesseinrichtung (7) gebildet ist.

9. Wegmessvorrichtung nach einem der vorangehenden Ansprüche, **dadurch gekennzeichnet, dass** das Federelement zur Festlegung eines Nullpunkts der Auslenkung des Bewegungsobjekts (2) vorgespannt ist.

10. Wegmessvorrichtung nach einem der vorangehenden Ansprüche, **dadurch gekennzeichnet, dass** die Auswerteeinrichtung (14) einen Verstärker (16) und/oder einen Differenzierer (17) und/oder eine Ausgabeeinrichtung aufweist.

11. Verwendung einer Wegmessvorrichtung (1) nach wenigstens einem der vorangehenden Ansprüche für ein linearbewegtes Objekt einer Vorrichtung aus der Öl- und/oder Gasgewinnung.

12. Verfahren zur Bestimmung wenigstens eines von einem Bewegungsobjekt zurückgelegten Weges mit den folgenden Schritten:
- Bewegen des Bewegungsobjekts (2) entlang eines im Wesentlichen geraden Weges gegen den Widerstand eines elastisch deformierbaren Rückhalteelements (6);
- Messen einer Rückhaltekraft, die in dem elastisch deformierbaren Rückhalteelement auftritt, mittels einer Kraftmesseinrichtung in Abhängigkeit von dem durch das Bewegungsobjekt zurückgelegten Weg, und
- Übermitteln eines der Rückhaltekraft entsprechenden Signals von der Kraftmesseinrichtung an eine Auswerteeinrichtung (5) und Bestimmen des durch das Bewegungsobjekt entsprechend zur Rückhaltekraft zurückgelegten Weges.

13. Verfahren nach Anspruch 12, wobei das elastisch deformierbare Rückhalteelement sich proportional zur Rückhaltekraft ausdehnt, die auf das elastisch deformierbare Rückhalteelement ausgeübt wird.

14. Verfahren nach Anspruch 12, wobei die Kraftmesseinrichtung (7) ihren elektrischen Widerstand in Abhängigkeit von der auf die Kraftmesseinrichtung ausgeübten Kraft ändert und als Ergebnis der Widerstandsänderung eine Spannungs- oder Stromänderung auftritt, die als Signal durch die Auswerteeinrichtung (5) ausgewertet wird.

15. Verfahren nach Anspruch 12, wobei das elastisch deformierbare Rückhalteelement zur Festlegung eines Nullpunkts vorgespannt ist.

16. Wegmessvorrichtung zur Messung eines von einem Bewegungsobjekt zurückgelegten Weges, wobei die Wegmessvorrichtung aufweist:
- ein mit einem Ende am Bewegungsobjekt angekoppeltes Federelement;
- eine mit dem anderen Ende des Federelements gekoppelte Kraftmesseinrichtung (7) zur Erzeugung eines elektrischen Signals proportional zur durch das Federelement als Ergebnis von dessen Verstellung ausgeübten Kraft, und
- eine Auswerteeinrichtung (15) zur Bestimmung einer Positionsinformation betreffend das Bewegungsobjekt auf der Grundlage des elektrischen Signals.

17. Wegmessvorrichtung nach Anspruch 16, wobei eine Drehentkopplungseinrichtung (26) zwischen dem Federelement und dem Bewegungsobjekt angeordnet ist und das Federelement von einer Drehbewegung des Bewegungsobjekts isoliert.

18. Wegmessvorrichtung nach Anspruch 16, wobei das Federelement mit einem Linearaktuator zur Umsetzung einer Drehbewegung in eine lineare Bewegung gekoppelt ist.

19. Wegmessvorrichtung nach Anspruch 16, wobei das Federelement unter Spannung ist.

20. Wegmessvorrichtung nach Anspruch 16, wobei das Federelement zur Bestimmung eines Nullpunkts des Bewegungsobjekts vorgespannt ist.
